(19) Europäisches Patentamt / European Patent Office / Office européen des brevets

(11) **EP 3 956 699 B1**

(12) **EUROPEAN PATENT SPECIFICATION**

(45) Date of publication and mention
of the grant of the patent:
**29.03.2023 Bulletin 2023/13**

(21) Application number: **19736483.9**

(22) Date of filing: **16.04.2019**

(51) International Patent Classification (IPC):
**G01V 99/00** [(2009.01)]

(52) Cooperative Patent Classification (CPC):
**G01V 99/00**

(86) International application number:
**PCT/IB2019/000533**

(87) International publication number:
**WO 2020/212721 (22.10.2020 Gazette 2020/43)**

(54) **A METHOD FOR UPSCALING OF RELATIVE PERMEABILITY OF THE PHASE OF A FLUID**

VERFAHREN ZUR HOCHSKALIERUNG DER RELATIVEN PERMEABILITÄT DER PHASE EINES
FLUIDS

PROCÉDÉ D'INTERPOLATION DE LA PERMÉABILITÉ RELATIVE DE LA PHASE D'UN FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.02.2022 Bulletin 2022/08**

(73) Proprietor: **TotalEnergies OneTech
92400 Courbevoie (FR)**

(72) Inventor: **MASSONNAT, Gérard
64018 Pau Cedex (FR)**

(74) Representative: **Plasseraud IP
66, rue de la Chaussée d'Antin
75440 Paris Cedex 09 (FR)**

(56) References cited:
**US-A1- 2008 234 988    US-A1- 2010 191 514
US-A1- 2012 221 306**

- **Sima Jonoud ET AL: "Validity of Steady-State
Upscaling Techniques", SPE Reservoir
Evaluation & Engineering, 1 April 2008
(2008-04-01), pages 405-416, XP055653183, DOI:
10.2118/100293-PA Retrieved from the Internet:
URL:http://www3.imperial.ac.uk/pls/portall
ive/docs/1/44193697.PDF [retrieved on
2019-12-16] cited in the application**

**Description**

FIELD OF THE INVENTION

The invention relates to a method for upscaling hydrocarbon reservoir model data, and in particular for upscaling relative permeability of a phase of a fluid comprising two phases.

TECHNICAL BACKGROUND

Economic challenges related to the oil industry require the possibility of describing realistically the geological structure of hydrocarbon reservoirs and the properties of the rocks which make them up.

By reservoir, is meant a sufficiently porous and permeable rock for it to be able to contain fluids (water, oil, gas). These rocks (limestones, dolomites, sandstones) are of economic interest if their volumes are sufficient and if they are covered by impermeable layers preventing the fluid from escaping. A reservoir for example is a sedimentary deposit or a series of connected deposits which contain fluids (oil, gas, water...). These deposits comprise porous and permeable rocks inside which fluid low. These fluids may possibly accumulate, forming a deposit.

A rock type is a category in which a rock or a soil may be placed, and which defined features such as permeability, porosity, and relative permeability of the phase of a multiphase fluid flowing through the rock. The permeability of the rock determines its capability of letting through the fluid. Porosity is the percentage of empty space inside the rock and gives the volume of fluid which the latter may contain. The relative permeability of a multiphase fluid is the ratio of the effective permeability of that phase to the absolute permeability of the rock, and reflects the fact that the flow of each phase within the rock is inhibited by the presence of the other phase(s). These features are not uniform in a reservoir, but depend on the geological structures which make them up. Thus a goal of characterizing reservoirs is to describe as accurately as possible the petrophysical features of the porous medium forming the reservoir. Also, characterization of a reservoir is based on a description as accurate as possible of the transport of fluids in the reservoir.

To perform this characterization, it is known to build a first fine-scale model representing the geological structure of the reservoir, said model comprising tens of millions of cells, and being populated with indication of a corresponding rock type, and corresponding features such as permeability, porosity, relative permeability values, obtained from experimental data such as drillings performed on site.

The number of cells in these fine-scale models prevents performing any numerical simulation such as a flow simulation, because the numerical simulation time increases exponentially with the number of cells in the model.

Thus, in order to achieve flow simulations within a reasonable computation time, it is common practice to build a coarse-scale simulation model, by grouping cells into meshes and assigning to the meshes an equivalent property calculated from local properties. This is the operation which is called upscaling, and which allows limiting the number of simulated cells and performing faster computations.

Upscaling of porosity is performed by simply computing the arithmetic mean of the porosities of the fine mesh.

Upscaling of permeability can be performed according to the teaching of document US 8359184,

In order to perform upscaling of relative permeability of a phase of a fluid, the most frequently used methods are steady-states techniques, because they are quick and simple to implement. Two dominant methods exist which are so-called capillary equilibrium limit method, "CL", and viscous limit method, "VL".

The CL method is based on the assumption that capillary forces dominate the flow. According to this method, the relative permeability of a phase of a fluid in a mesh comprising a plurality of cells may be computed, by computing an arithmetic mean of the values of the relative permeabilities of the phase of the fluid in each cell, for a given common value of water saturation - in reservoir modeling the multiphase fluid comprises at least water and gas and/or oil:

$$K_{r,eq}(Sw) = \frac{\sum_i (K.K_r(Sw))_i}{\sum_i K_i}$$

where i designates a cell of the mesh, K is the permeability of the rock type attributed to the cell, and $Kr(Sw)_i$ is a value of the relative permeability of the phase of the fluid in the cell i for a value $S_w$ of water saturation of the fluid.

The VL method is based on the assumption that viscous forces dominate the flow. According to this method, the relative permeability of a phase of a fluid in a mesh comprising a plurality of cells may be computed, by computing an arithmetic mean of the values of the relative permeabilities of the phase of the fluid in each cell, for a given common value of fractional flow. So this method comprises calculating a value Sw corresponding to a determined value of fractional flow fw, and then computing the equivalent relative permeability of a phase of the fluid by:

$$K_{r,eq}(Sw(fw)) = \frac{\sum_i (K.K_r(Sw(fw)))_i}{\sum_i K_i}$$

It has been demonstrated in the publication by Jonoud et al. "Validity of Steady-State Upscaling Techniques", SPE Reservoir Evaluation & Engineering n° 100293, April 2008, that the CL method is only valid for very low values of fluid flow, which is not realistic in most of the exploitation conditions. On the other hand, the VL method can be applied for important flow values and over long distances.

However, both methods exhibit two major drawbacks, which are that they allow neither taking into account the dimension of the meshes in the computation of the equivalent relative permeabilities, nor modeling anisotropy of the reservoir in the values of equivalent relative permeabilities. In addition, US2008234988 A1 discloses methods for upscaling from fine-scale earth models to produce coarse-scale reservoir simulation models.

PRESENTATION OF THE INVENTION

In view of the above, the invention aims at providing a method for upscaling values of relative permabilities of a phase of a fluid, wherein upscaled values of relative permeability are directional and depend upon the size of the mesh of the model.

An aim of the invention is in particular to provide a method for computing different equivalent relative permeability values of the phase of a fluid, according to the direction of the flow within the model.

Accordingly, a method for upscaling relative permeability of a phase of a fluid in a reservoir model is disclosed in claim 1, the method being implemented by a computer, and comprising the steps of:

- defining a reservoir model comprising a volume of dimensions $D_H$, $D_V$ along respectively two distinct directions H,V,
- receiving statistical data relative to the volume, comprising :

  ∘ relative proportions of at least two rock types, wherein each rock type corresponds to a permeability value and respective curves of relative permeability with water saturation of two phases of a fluid within the rock type, one of the phases being water, and
  ∘ a variogram of absolute permeability defined by correlation lengths $L_H$, $L_V$, along the two directions H,V, and,

- computing, equivalent relative permeability values of a phase of the fluid within the volume, comprising:

  ∘ at least an equivalent relative permeability value according to the first direction H, and
  ∘ at least an equivalent relative permeability value according to the second direction V,

wherein each equivalent relative permeability value of a phase of the fluid according to a direction d chosen among H,V is computed based on relative permeability values of the phase of the fluid within each rock type, and on a coefficient depending on the anisotropy of the volume and on non-ergodicity parameters $\varepsilon_H$, $\varepsilon_V$ relative to each direction H,V, the non-ergodicity parameters depending on the volume dimensions along said directions and on the variogram of absolute permeability.

In embodiments, the computing of an equivalent relative permeability value of a phase according to the direction d is based on a mean power formula:

$$K_{r,eq,d} = \frac{\sqrt[\omega_d]{\sum_i \left(K_i . K_{r,i}\right)^{\omega_d}}}{\sqrt[\omega_d]{\sum_i (K_i)^{\omega_d}}}$$

where $K_i$ is the permeability value of a rock type i, $K_{r,i}$ is a relative permeability value of a phase of a fluid within the rock type i, $K_{r,eq,d}$ is an equivalent permeability value of the phase of the fluid according to the direction d, and $\omega_d$ is a power coefficient, applicable for the direction d, defined, for the direction H being a horizontal direction, by :

$$\omega_H = \frac{Arctan\alpha}{\pi - Arctan\alpha}$$

and for the direction V being a vertical direction, by:

$$\omega_V = -2\omega_H + 1$$

where $\alpha$ is the coefficient depending on the anisotropy of the volume and on non-ergodicity parameters, defined by:

$$\alpha = \frac{L_H}{L_V} \times \sqrt{\frac{K_V}{K_H}} \epsilon_H \epsilon_V$$

where $\frac{K_V}{K_H}$ and $\frac{L_H}{L_V}$ are petrophysical and geostatistical anisotropies depending on the statistical data, and $\varepsilon_H$, $\epsilon_V$ are the non-ergodicity parameters relative respectively to each direction H, V.

In embodiments, the computation of an equivalent relative permeability value of a phase according to a direction is performed for a determined value of water saturation of the phase of the fluid, based on equivalent relative permeability values of the phase within each of the rock types for the same determined value of water saturation.

In embodiments, the computation of an equivalent relative permeability value of a phase according to a direction is performed for a determined value of fractional flow of the phase of the fluid, based on equivalent relative permeability values of the phase of the fluid within each of the rock types for the same determined value of fractional flow.

In embodiments, the method further comprises computing values of equivalent relative permeability of a phase of the fluid according to a first direction for determined values of water saturation, and computing values of equivalent relative permeability of the phase of the fluid according to a second direction for determined values of fractional flow.

In embodiments, each non-ergodicity parameter $\varepsilon_d$ relative to the direction d is also a function of a mean m and a variance $\sigma$ of the reservoir absolute permeability values, the mean m and the variance $\sigma$ depending on the statistical data.

In embodiments, wherein each non-ergodicity parameter $\varepsilon_d$ relative to a direction d is expressed as a function:

$$\varepsilon_d = f(X_d)$$

wherein $X_d$ depends on the ratio ($D_d/L_d$) of a dimension d of the volume to the correlation length of the dimension d, and on the limiting value ($D_d/L_d$)$_{loss}$ of the ratio, and wherein the function

$$\varepsilon_d = f(X_d)$$

satisfies the condition:

$$\lim_{\frac{D_d}{L_d} \to \left(\frac{D_d}{L_d}\right)_{loss}} \varepsilon_d = 1$$

In embodiments, Xd is given by:

$$X_d = 1 - \frac{\left(\frac{D_d}{L_d}\right)}{\left(\frac{D_d}{L_d}\right)_{loss}}$$

and the function

$$\varepsilon_d = f(X_d)$$

Is of the polynomial type:

$$\varepsilon_d = 1 + \sum_{i=1\dots} a_i X_d^i$$

In embodiments, the method comprises determining the distribution of each non-ergodicity parameter $\varepsilon_d$ using an analytical model.

According to another aspect, a computer program product is disclosed, comprising code instructions for implementing the method according to the above description, when it is executed by a computer.

According to another aspect, a non-transitory computer readable storage medium encoding a computer executable program for executing the method according to the above description.

According to the above method, an equivalent relative permeability value of a phase of a fluid may be computed in two main directions of a model, for each mesh of the model. The method thus takes into account the anisotropy of the reservoir for upscaling relative permeability values.

Furthermore, according to the above method, the upscaled values of relative permeability depend upon the dimensions of the mesh.

DESCRIPTION OF THE DRAWINGS

Other features and advantages of the invention will be apparent from the following detailed description given by way of non-limiting example, with reference to the accompanying drawings, in which:

- Figure 1 schematically shows the main steps of a method according to an embodiment of the invention.
- Figure 2 schematically shows a device for implementing a method according to an embodiment of the invention.
- Figure 3 shows an example of a reservoir model,
- Figure 4 is a graph of a power coefficient with a ratio LV/DV, where the power coefficient is not computed based on any non-ergodicity coefficient.
- Figures 5a and 5b show graphs of equivalent relative permeability values along two directions, computed from the relative permeability values of two rock types according to two possible implementations of the method according to the invention.
- Figures 6a and 6b show graphs of equivalent relative permeability values along a same direction but for two different volume dimensions, computed from the relative permeability values of two rock types according to two possible implementations of the method according to the invention.

DETAILED DESCRIPTION OF AT LEAST AN EMBODIMENT OF THE INVENTION

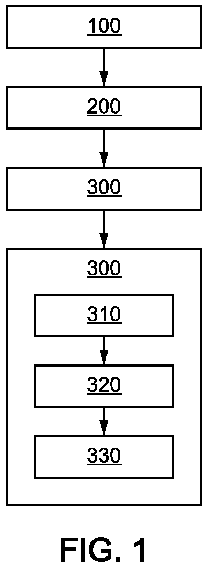

With reference to figure 1, the main steps of a method for upscaling data of a reservoir model according to an embodiment of the invention will now be described. In particular, aspects of the disclosure relate to the upscaling of relative permeability values of two fluids, or two phases of a fluid, flowing through a porous medium.

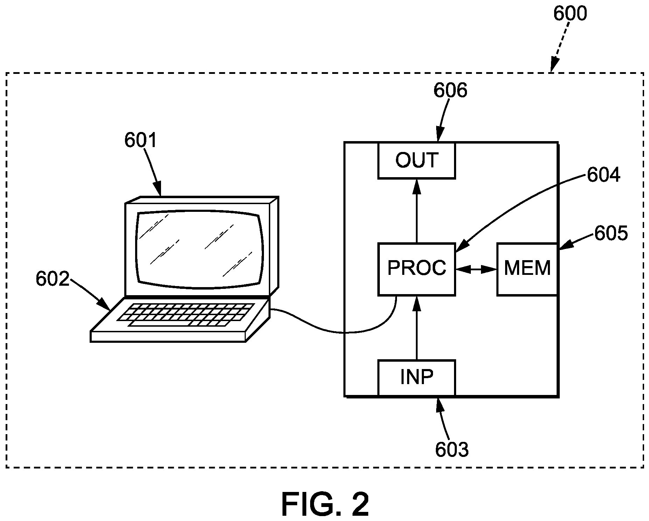

As shown in figure 2, the method is implemented by means of a computer 600 comprising a processor 604 adapted to execute a computer program designed for applying the steps of the method. The program comprising instructions for executing the method is stored in a memory 605. The corresponding application typically comprises modules assigned to various tasks which will be described and makes available a suitable user interface, providing input and handling of the required data. The relevant program is for example written in Fortran, if necessary supporting object programming, in C, C++, Java, C#, (Turbo)Pascal, Object Pascal, or more generally stemming from object programming.

The computer may also comprise an input interface 603 for reception of several data, such as statistical data, used for the method according to the invention, and an output interface 606 for outputting the upscaled data of the reservoir model. To ease the interaction with the computer, the latter preferably comprises a display 601 and interface 602 for a user to enter instructions, such as a keyboard. Alternatively the display and interface may be formed by a single Human-Machine Interface allowing such as a tactile screen.

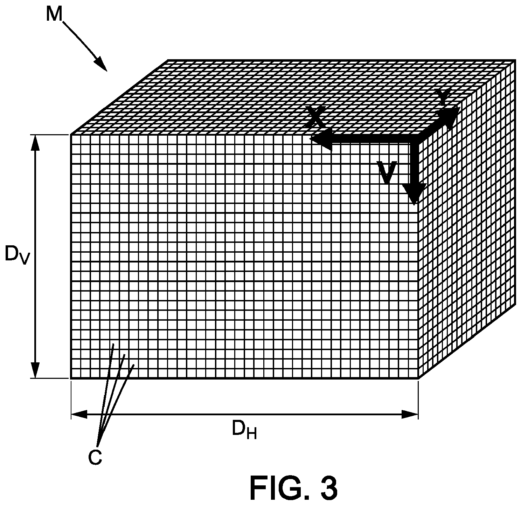

Back to figure 1, a first step 100 of the method comprises defining a reservoir model, an example of which is shown in figure 3, comprising a volume having dimensions $D_X$, $D_Y$, $D_V$ according to three distinct directions X,Y,V, where X and Y are orthogonal directions within a plane and V is a direction orthogonal to that plane. Preferably, the plane is horizontal and the direction V is vertical.

In all that follows, it is considered that $D_X = D_Y = D_H$ where $D_H$ denotes a dimension along one of these directions X and Y. It will therefore only be considered two dimensions $D_H$, $D_V$ along two typically horizontal H and vertical dimensions V, respectively. The definition of the model preferably comprises a user setting the dimensions $D_H$, $D_V$.

The method then comprises a step 200 of receiving statistical data relative to the volume. The statistical data comprises:

- Relative proportions of at least two rock types within the volume, wherein each rock type defines to a porosity value, an absolute permeability value, and also respective curves of relative permeability with water saturation of two phases of a fluid within the rock type, one of the phases being water. The other phase of the fluid may be preferably oil or gas.
- The statistical data loaded for the volume also comprises a variogram of absolute permeability within the volume, the variogram being defined by correlation lengths (or spans) $L_H$, $L_V$, along the directions H,V.

The variogram provides a measure of the spatial continuity of a property. The span $L_V$ is measured at the well, for example on the log. The span $L_H$ is generally estimated by a geologist.

Preferably, the statistical data is stored in the computer's memory and the step of receiving this data is performed by loading a file comprising the desired data.

The method then comprises a step 300 of upscaling the relative permeability values of the two phases of the considered fluid within the volume, i.e. computing, for the whole volume, equivalent relative permeability values for each phase of the considered fluid.

As will be explained in more details below, as the relative permeability of a phase of a fluid is a function of the water saturation within the medium, step 300 may comprise computing at least one value of equivalent relative permeability for each phase of the fluid, corresponding to one value of water saturation. Alternatively, step 300 may comprise computing a number of values of equivalent relative permeability for each of a plurality of values of water saturation.

Additionally, according to the claimed invention, step 300 comprises the computation, for each phase of the fluid, of at least one respective value of equivalent relative permeability value in the volume for each direction H and V.

In this perspective, the invention is based on the hypothesis that there is a correlation between the absolute permeability field and the relative permeability field, i.e. the variogram of absolute permeability is applicable to the relative permeability.

Hence, the method replaces the computation of equivalent relative permeability values within a volume that was performed previously by computation of an arithmetic mean, by the computation of a mean power formula similar to the mean power formula already proposed for the computation of equivalent absolute permeability values, and given by:

$$K_{r,eq,d} = \frac{\sqrt[\omega_d]{\sum_i (K_i . K_{r,i})^{\omega_d}}}{\sqrt[\omega_d]{\sum_i (K_i)^{\omega_d}}}$$

where:

- $K_i$ is the permeability value of a rock type i,
- $K_{r,i}$ is a relative permeability value of a phase of a fluid within a rock type i, for instance for a determined value of water saturation within the porous medium,
- $K_{r,eq,d}$ is an equivalent permeability value of the same phase of the fluid, according to a direction d, d being either H or V, and for instance for the same value of water saturation within the porous medium, and
- $\omega_d$ is a power coefficient which value depends on the direction d, H or V.

More specifically, each power coefficient $\omega_d$ according to a direction d is computed based on a coefficient $\alpha$ which depends on the anisotropy within the volume, and on non-ergodicity parameters $\varepsilon_H$, $\varepsilon_V$ relative to each direction H, V and which are derived from the statistical data relative to the volume and from the volume dimensions, as explained in more details below.

Along the horizontal direction H, the power coefficient $\omega_H$ is defined according to the following formula:

$$\omega_H = \frac{Arctan\alpha}{\pi - Arctan\alpha} \quad (1)$$

$$\alpha = \frac{L_H}{L_V} \times \sqrt{\frac{k_V}{k_H}} \epsilon_H \epsilon_V \quad (2)$$

where $\frac{k_V}{k_H}$ and $\frac{L_H}{L_V}$ are petrophysical and geostatistical anisotropies of the volume, which may be considered as input data and can for instance be received along with the statistical data received at step 200. $L_H/L_V$ is a ratio of variogram ranges measuring the geostatistical anisotropy, and is greater than 10. The ratio $k_V/k_H$ measuring the intrinsic petrophysical anisotropy is comprised between 0.01 and 1. This ratio is measured at a small scale, on plugs or logs, or even estimated by a geologist.

Along the vertical direction, the power coefficient is defined according to the following formula:

$$\omega_V = -2\omega_H + 1$$

Ergodicity is defined, at least within the scope of the present invention, as a property expressing the fact that in a process, each sample which may be taken into consideration is also representative of the whole, from a statistical point of view. On the other hand, by non-ergodicity, is meant that a sample is not representative of the whole, always from a statistical point of view. In that case the sample is related to the spatial arrangement of the relative permeability field.

It has been realized that ergodicity conditions are observed for absolute permeability when an investigation volume is sufficiently large. However, at the typical scale of the volume, the ergodicity conditions are not always observed.

Moreover, following the hypothesis according to which the geostatistical properties of the absolute permeability and relative permeability are identical, one can assume that ergodicity conditions determined for absolute permeability within a volume are also applicable for relative permeability, and hence that determining non-ergodicity parameters for absolute permeability from the variogram of absolute permeability allows applying the same non-ergodicity parameters to compute more accurate values of equivalent relative permeabilities of a phase of a fluid. Hence the invention uses such non-ergodicity parameters in the upscaling of equivalent relative permeability values.

Thus the invention makes it possible to take into account the heterogeneities within the volume to compute for the volume and for a given phase of the fluid:

- At least an equivalent relative permeability value according to the first direction H, and
- At least an equivalent relative permeability value according to the second direction V.

Therefore, the volume is no longer assigned a single equivalent relative permeability value applicable whatever the considered direction of fluid flow, but two values in the two distinct directions H and V. This allows taking into account both the heterogeneities within the volume and the volume dimensions, for computing more accurate equivalent relative permeability values than the prior art methods.

In order to be able to compute such equivalent relative permeability values, step 300 of the method first comprises a substep 310 of determining values of non-ergodicity parameters $\epsilon_V$, $\epsilon_H$ of the absolute permeability.

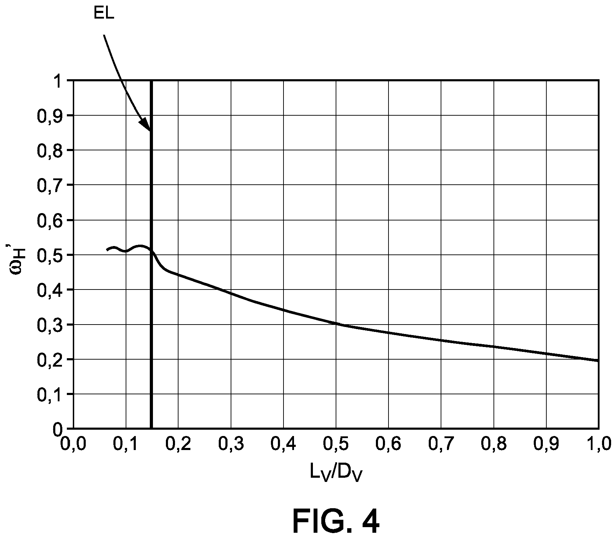

With reference to figure 4 is shown the variation, with a ratio $L_V/D_V$, of a power coefficient $\omega_H'$, in which the coefficient a only takes into account the anisotropies of the volume, but does not take into account non-ergodicity parameters. In other words, the power coefficient shown in this graph is computed with a coefficient $\alpha'$ denoted:

$$\alpha' = \frac{L_H}{L_V} \times \sqrt{\frac{K_V}{K_H}}$$

The same type of curve would have been obtained by replacing $L_V/D_V$ with $L_H/D_H$. It should be noted that this ratio is the reciprocal of the ratio mentioned in the present application, i.e. $(D_V/L_V)$, respectively $(D_H/L_H)$, whence the aspect of the curve.

It has been ascertained experimentally that the coefficient $\omega_H'$ depends on the investigation volume defined by $D_H$ and $D_V$ and more precisely on $(D_H/L_H)$ and $(DV/L_V)$. From a certain value of these ratios $(D_H/L_H)$ and $(D_V/L_V)$, this coefficient $\omega_H'$ is constant (as illustrated in FIG. 4). The ergodicity conditions are then found. The limiting values, i.e. below which the ergodicity conditions are no longer observed, are denoted as $(D_H/L_H)_{loss}$ and $(D_V/L_V)_{loss}$. Finally below these limiting values, $\omega_H'$ does not only depend on the ratios $k_V/k_H$ and $L_H/L_V$, but also on $(D_H/L_H)$, $(D_V/L_V)$, $(D_H/L_H)_{loss}$ and $(D_V/L_V)_{loss}$. whence the correction obtained by use of non-ergodicity parameters to obtain the coefficient $\omega_H$.

It therefore proves to be advantageous to model the non-ergodicity coefficients as functions of $(D_H/L_H)$ and $(D_V/L_V)$ as well as of $(D_H/L_H)_{loss}$ and $(D_V/L_V)_{loss}$.

In practice, the non-ergodicity parameters may for example be expressed as a function $\epsilon_d = f(X_d)$, with d being respectively H or V depending on the considered direction, wherein $X_d$ depends on the ratio $(D_d/L_d)$ and on its limiting value $(D_d/L_d)_{loss}$. Taking into account the preceding observations, the function $\varepsilon_d = f(X_d)$ should preferably tend to 1 when $(D_d/L_d)$ tends to its limiting value $(D_d/L_d)_{loss}$ which is further noted as:

$$\lim_{\frac{D_d}{L_d} \to \left(\frac{D_d}{L_d}\right)_{loss}} \varepsilon_d = 1$$

In particular, a simple scheme is the following:

$$X_d = 1 - \frac{\frac{D_d}{L_d}}{\left(\frac{D_d}{L_d}\right)_{loss}}$$

And the function $\varepsilon_d = f(X_d)$ is of the polynomial type, i.e. :

$$\varepsilon_d = 1 + \sum_i a_i X_d^i$$

Knowing the span values $L_V$ and $L_H$, the ratio $k_V/k_H$ and the permeability mean m and variance $\sigma$ as statistical coefficients of the model (provided or inferred from the provided data), the limiting values $(D_H/L_H)_{loss}$ and $(D_V/L_V)_{loss}$ may be determined by tables obtained experimentally, i.e. the minimum volume size from which ergodicity is observed. These tables may for example be obtained by numerical experimentation, by using a known pressure solver method based on Darcy's law. To do this, the $\omega_H$' coefficient as obtained on a plurality of models each comprising at least one mesh comprising a plurality of cells I populated with various rock types, is plotted against $L_V/D_V$ or $L_H/D_H$ or the reciprocal ratio thereof, by resorting to a mean power formula applied for upscaling of absolute permeability :

$$K_H{}^{\omega_H} \propto \sum K_{H_i}{}^{\omega_H}$$

Where $K_H$ is the absolute permeability of the mesh and $K_{H_i}$ is the absolute permeability of each cell. The tables are obtained by plotting the $\omega_H$' coefficient for a plurality of models each having meshes of respectively different dimensions. Various distributions of the non-ergodicity parameters $\varepsilon_V$, $\varepsilon_H$ (i.e. various coefficients of the polynomial function given above) may be obtained according to either optimistic, median or pessimistic estimation of these parameters. The relevant estimations are provided by known analytical tools.

Then, for each hypothesis regarding the distribution of the non-ergodicity parameters, it is possible to compute from the values of the $(D_d/L_d)$ and $(D_d/L_d)_{loss}$ ratios, respective values of $\varepsilon_V$ and $\varepsilon_H$.

Once various values of $\varepsilon_V$, respectively $\varepsilon_H$ have been obtained according to different estimations of these parameters and the functions described above, step 320 of the method comprises computing the coefficient $\alpha$ and respective power coefficients $\omega_V$, $\omega_H$, from the non-ergodicity coefficients, according to equations (1) and (2) given above.

The computation 330 of at least one value of equivalent relative permeability of a phase of a fluid according to one of the directions H and V for the volume may then be performed according to the so-called capillary limit method or viscous limit method, depending on the assumptions done on the reservoir model.

If it is assumed that capillary forces dominate the flow for a given direction d, then the capillary limit method may be implemented, and in that case an equivalent relative permeability value of a phase of the fluid according to the direction d is performed for a determined value of water saturation $S_w$ of the phase of the fluid. For the given water saturation $S_w$ of the phase of the fluid, the relative permeability values $K_{r,i}(S_w)$ of the phase of the fluid within the rock types i are determined and an equivalent relative permeability value in the direction d is computed as:

$$K_{r,eq,d}(S_w) = \frac{\sqrt[\omega_d]{\sum_i \left(K_i . K_{r,i}(S_w)\right)^{\omega_d}}}{\sqrt[\omega_d]{\sum_i (K_i)^{\omega_d}}}$$

If on the other hand it is assumed that viscous forces dominate the flow for a direction d, then the viscous limit method may be implemented, and in that case an equivalent relative permeability value of a phase of the fluid according to the direction d is performed for a determined value of fractional flow of the phase of the fluid. For the given value of fraction flow F of the phase of the fluid, the relative permeability values $K_{r,i}(F)$ of the fluid within the rock types I are determined and an equivalent relative permeability value in the direction d is computed as:

$$K_{r,eq,d}(F) = \frac{\sqrt[\omega_d]{\sum_i \left(K_i . K_{r,i}(F)\right)^{\omega_d}}}{\sqrt[\omega_d]{\sum_i (K_i)^{\omega_d}}}$$

In both cases it is to be noted that, as explained above there may be several values of $\omega_d$ according to the various values of $\varepsilon_d$ which could be computed according to different estimations, and hence several values of equivalent relative permeability values may be obtained for a common $S_w$ or F, and for the direction d.

Advantageously, as the method allows computing respective values of equivalent relative permeability for the two directions H and V, it is possible to compute an equivalent relative permeability value for a first direction according to one of the viscous limit method and the capillary limit method, and to compute an equivalent relative permeability for a second direction according to the other method, if this allows a more accurate representation of the reservoir.

The computed values of $K_{r,eq,d}$ for the volume may then be stored in the memory.

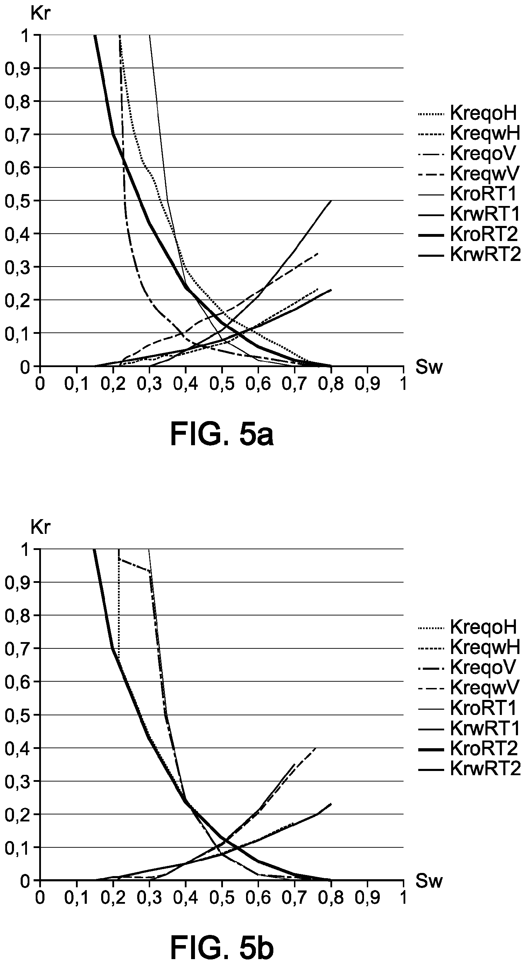

With reference to figures 5a and 5b are shown two graphs, each displaying:

- Curves of relative permeability respectively of oil and water with water saturation in a rock type 1 RT, and a rock-type 2 $RT_2$, respectively denoted KroRT1, KrwRT1, KroRT2, KrwRT2, where o stands for oil and w stands for water.
- Curves of equivalent relative permeability respectively of oil and water with water saturation in the volume, according to directions H and V, respectively denoted KreqoH, KreqwH, KreqoV, KreqwV.
- In figure 5a, the curves of equivalent relative permeability are computed with the viscous limit method (i.e. based on relative permeability values for $RT_1$ and $RT_2$ determined for common values of water saturation), whereas in figure 5b the curves are computed with the capillary limit method (i.e. based on relative permeability values for $RT_1$ and $RT_2$ determined for common values of fractional flow).

These graphs allow underlining the influence both of the direction H or V, and of the computation method, in the computation of the equivalent relative permeability.

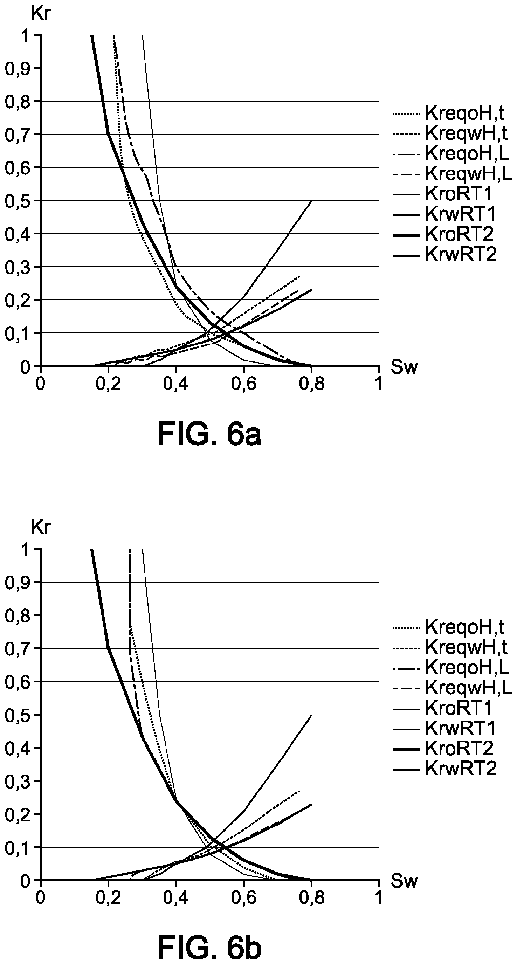

Moreover, with reference to figures 6a and 6b are shown two graphs, each displaying:

- Curves of relative permeability respectively of oil and water with water saturation in a rock type 1 RT, and a rock-type 2 $RT_2$, respectively denoted KroRT1, KrwRT1, KroRT2, KrwRT2
- Curves of equivalent relative permeability respectively of oil and water with water saturation in the volume, according to direction H, computed for a volume having two different dimensions along H, respectively denoted KreqoH,t, KreqwH,t, KreqoH,L, KreqwH,L, where t designates the thinner dimension along H and L designates the larger dimension along H.
- In figure 6a, the curves of equivalent relative permeability are computed with the viscous limit method (i.e. based on relative permeability values for $RT_1$ and $RT_2$ determined for common values of water saturation), whereas in figure 6b the curves are computed with the capillary limit method (i.e. based on relative permeability values for RT1 and RT2 determined for common values of fractional flow).

These graphs also underline the impact of the choice of the method in the computation of the equivalent permeability value, but also underline the importance of taking into account the volume dimension according to the direction for which the equivalent relative permeability value is computed.

## Claims

1. A method for upscaling relative permeability of a phase of a fluid in a reservoir model, the method being implemented by a computer, and comprising the steps of:

    - defining (100) a reservoir model comprising a volume of dimensions $D_H$, $D_V$ along respectively two distinct directions H,V,
    - receiving (200) statistical data relative to the volume, comprising :

        ◦ relative proportions of at least two rock types, wherein each rock type corresponds to a permeability value and respective curves of relative permeability with water saturation of two phases of a fluid within the rock type, one of the phases being water, and
        ◦ a variogram of absolute permeability defined by correlation lengths $L_H$, $L_V$, along the two directions H,V, and,

    - computing (330), equivalent relative permeability values of a phase of the fluid within the volume, comprising:

        ◦ at least an equivalent relative permeability value ($Kr_{eq,H}$) according to the first direction H, and
        ◦ at least an equivalent relative permeability value ($Kr_{eq,V}$) according to the second direction V,

    **characterized in that** each equivalent relative permeability value of a phase of the fluid according to a direction d chosen among H,V is computed based on relative permeability values of the phase of the fluid within each rock type, and on a coefficient depending on the anisotropy of the volume and on non-ergodicity parameters $\varepsilon_H$, $\varepsilon_V$ relative to each direction H,V, the non-ergodicity parameters depending on the volume dimensions along said directions and on the variogram of absolute permeability.

2. A method according to claim 1, wherein the computing of an equivalent relative permeability value of a phase according to the direction d is based on a mean power formula:

$$K_{r,eq,d} = \frac{\sqrt[\omega_d]{\sum_i (K_i . K_{r,i})^{\omega_d}}}{\sqrt[\omega_d]{\sum_i (K_i)^{\omega_d}}}$$

where $K_i$ is the permeability value of a rock type i, $K_{r,i}$ is a relative permeability value of a phase of a fluid within the rock type i, $K_{r,eq,d}$ is an equivalent permeability value of the phase of the fluid according to the direction d, and $\omega_d$ is a power coefficient, applicable for the direction d, defined, for the direction H being a horizontal direction, by :

$$\omega_H = \frac{Arctan\alpha}{\pi - Arctan\alpha}$$

and for the direction V being a vertical direction, by:

$$\omega_V = -2\omega_H + 1$$

where a is the coefficient depending on the anisotropy of the volume and on non-ergodicity parameters, defined by:

$$\alpha = \frac{L_H}{L_V} \times \sqrt{\frac{K_V}{K_H}} \epsilon_H \epsilon_V$$

where $\frac{K_V}{K_H}$ and $\frac{L_H}{L_V}$ are petrophysical and geostatistical anisotropies depending on the statistical data, and $\varepsilon_H$, $\varepsilon_V$ are the non-ergodicity parameters relative respectively to each direction H, V.

3. A method according to claim 2, wherein the computation (330) of an equivalent relative permeability value of a phase according to a direction is performed for a determined value of water saturation of the phase of the fluid, based on equivalent relative permeability values of the phase within each of the rock types for the same determined value of water saturation.

4. A method according to claim 2, wherein the computation (330) of an equivalent relative permeability value of a phase according to a direction is performed for a determined value of fractional flow of the phase of the fluid, based on equivalent relative permeability values of the phase of the fluid within each of the rock types for the same determined value of fractional flow.

5. A method according to claim 3 and 4, comprising computing (330) values of equivalent relative permeability of a phase of the fluid according to a first direction for determined values of water saturation, and computing values of equivalent relative permeability of the phase of the fluid according to a second direction for determined values of fractional flow.

6. A method according to any of the preceding claims, wherein each non-ergodicity parameter $\varepsilon_d$ relative to the direction d is also a function of a mean m and a variance σ of the reservoir absolute permeability values, the mean m and the variance σ depending on the statistical data.

7. A method according to any of the preceding claims, wherein each non-ergodicity parameter $\varepsilon_d$ relative to a direction d is expressed as a function:

$$\varepsilon_d = f(X_d)$$

wherein $X_d$ depends on the ratio $(D_d/L_d)$ of a dimension d of the volume to the correlation length of the dimension d, and on the limiting value $(D_d/L_d)_{loss}$ of the ratio, and wherein the function

$$\varepsilon_d = f(X_d)$$

satisfies the condition:

$$\lim_{\frac{D_d}{L_d} \to \left(\frac{D_d}{L_d}\right)_{loss}} \varepsilon_d = 1$$

8. A method according to claim 7, wherein

$$X_d = 1 - \frac{\left(\frac{D_d}{L_d}\right)}{\left(\frac{D_d}{L_d}\right)_{loss}}$$

And the function

$$\varepsilon_d = f(X_d)$$

Is of the polynomial type:

$$\varepsilon_d = 1 + \sum_{i=1...} a_i X_d^i$$

9. A method according to claim 8, comprising determining the distribution of each non-ergodicity parameter $\varepsilon_d$ using an analytical model.

10. A computer program product, comprising code instructions for implementing the method according to any of the preceding claims, when it is executed by a computer.

11. A non-transitory computer readable storage medium encoding a computer executable program for executing the method according to any of claims 1-9.

**Patentansprüche**

1. Verfahren zum Hochskalieren der relativen Permeabilität einer Fluidphase in einem Reservoirmodell, wobei das Verfahren durch einen Computer implementiert wird, umfassend die Schritte:

   - Definieren (100) eines Reservoirmodells, das ein Volumen mit den Dimensionen $D_H$, $D_V$ entlang jeweils zweier verschiedenen Richtungen H, V, umfasst,
   - Empfangen (200) von statistischen Daten relativ zum Volumen, umfassend:

      ◦ relative Anteile von mindestens zwei Gesteinstypen, wobei jeder Gesteinstyp einem Permeabilitätswert und jeweiligen Kurven der relativen Permeabilität mit einer Wassersättigung von zwei Fluidphasen innerhalb des Gesteinstyps entspricht, wobei eine der Phasen Wasser ist, und
      ◦ ein Variogramm von einer absoluten Permeabilität, definiert durch die Korrelationslängen $L_H$, $L_V$ entlang der beiden Richtungen H, V, und,

   - Berechnen (330) äquivalenter relativer Permeabilitätswerte einer Fluidphase innerhalb des Volumens, umfassend:

      ◦ mindestens einen äquivalenten relativen Permeabilitätswert ($Kr_{eq,H}$) gemäß der ersten Richtung H, und
      ◦ mindestens einen äquivalenten relativen Permeabilitätswert ($Kr_{eq,V}$) gemäß der zweiten Richtung V,

   **dadurch gekennzeichnet, dass** jeder äquivalente relative Permeabilitätswert einer Fluidphase gemäß einer Richtung d, ausgewählt aus H, V, berechnet wird auf der Grundlage von relativen Permeabilitätswerten der Fluidphase innerhalb jedes Gesteinstyps, und von einem Koeffizienten, der von der Anisotropie des Volumens und von Nicht-Ergodizitätsparametern $\varepsilon_H$, $\varepsilon_V$ relativ zu jeder Richtung H, V, abhängt, wobei die Nicht-Ergodizitätsparameter von den Volumenabmessungen entlang der Richtungen und von dem Variogramm der absoluten Permeabilität abhängen.

2. Verfahren nach Anspruch 1, wobei das Berechnen eines äquivalenten relativen Permeabilitätswertes einer Phase gemäß der Richtung d auf einer Formel für mittlere Leistung basiert:

$$K_{r,eq,d} = \frac{\sqrt[\omega_d]{\sum_i \left( K_i . K_{r,i} \right)^{\omega_d}}}{\sqrt[\omega_d]{\sum_i \left( K_i \right)^{\omega_d}}}$$

wobei $K_i$ der Permeabilitätswert eines Gesteinstyps i ist, $K_{r,i}$ ein relativer Permeabilitätswert einer Fluidphase innerhalb des Gesteinstyps i ist, $K_{r,eq,d}$ ein äquivalenter Permeabilitätswert der Fluidphase gemäß der Richtung d ist, und $\omega_d$ ein für die Richtung d anwendbarer Leistungskoeffizient ist, definiert, für die Richtung H, wobei H eine horizontale Richtung ist, durch:

$$\omega_H = \frac{Arctan\alpha}{\pi - Arctan\alpha}$$

und definiert, für die Richtung V, wobei V eine vertikale Richtung ist, durch:

$$\omega_V = -2\omega_H + 1$$

wobei $\alpha$ der Koeffizient ist, der von der Anisotropie des Volumens und von den Nicht-Ergodizitätsparametern abhängt, definiert durch:

$$\alpha = \frac{L_H}{L_V} \times \sqrt{\frac{K_V}{K_H}} \epsilon_H \epsilon_V$$

wobei $\frac{K_V}{K_H}$ und $\frac{L_H}{L_V}$ petrophysikalische und geostatistische Anisotropien sind, die von den statischen Daten abhängen, und $\varepsilon_H$, $\varepsilon_V$ die Nicht-Ergodizitätsparameter relativ jeweils zu jeder Richtung H, V, sind.

3. Verfahren nach Anspruch 2, wobei das Berechnen (330) eines äquivalenten relativen Permeabilitätswertes einer Phase gemäß einer Richtung für einen bestimmten Wert einer Wassersättigung der Fluidphase auf der Grundlage von äquivalenten relativen Permeabilitätswerten der Phase innerhalb jedes der Gesteinstypen für denselben bestimmten Wert einer Wassersättigung durchgeführt wird.

**4.** Verfahren nach Anspruch 2, wobei das Berechnen (330) eines äquivalenten relativen Permeabilitätswertes einer Phase gemäß einer Richtung für einen bestimmten Wert eines fraktionierten Flusses der Fluidphase auf der Grundlage von äquivalenten relativen Permeabilitätswerten der Fluidphase innerhalb jedes der Gesteinstypen für denselben bestimmten Wert eines fraktionierten Flusses durchgeführt wird.

**5.** Verfahren nach Anspruch 3 und 4, umfassend Berechnen (330) von Werten einer äquivalenten relativen Permeabilität einer Fluidphase gemäß einer ersten Richtung für bestimmte Werte einer Wassersättigung, und Berechnen von Werten einer äquivalenten relativen Permeabilität der Fluidphase gemäß einer zweiten Richtung für bestimmte Werte eines fraktionierten Flusses.

**6.** Verfahren nach einem der vorhergehenden Ansprüche, wobei jeder Nicht-Ergodizitätsparameter $\varepsilon_d$ relativ zur Richtung d auch eine Funktion eines Mittelwertes m und einer Varianz $\sigma$ der absoluten Permeabilitätswerte des Reservoirs ist, wobei der Mittelwert m und die Varianz $\sigma$ von den statistischen Daten abhängen.

**7.** Verfahren nach einem der vorhergehenden Ansprüche, wobei jeder Nicht-Ergodizitätsparameter $\varepsilon_d$ relativ zu einer Richtung d als eine Funktion ausgedrückt wird:

$$\varepsilon_d = f(X_d)$$

wobei $X_d$ vom Verhältnis $(D_d/L_d)$ einer Dimension d des Volumens zur Korrelationslänge der Dimension d, und vom Grenzwert $(D_d/L_d)_{loss}$ des Verhältnisses abhängt, und wobei die Funktion

$$\varepsilon_d = f(X_d)$$

die Bedingung erfüllt:

$$\lim_{\frac{D_d}{L_d} \to \left(\frac{D_d}{L_d}\right)_{loss}} \varepsilon_d = 1$$

**8.** Verfahren nach Anspruch 7, wobei

$$X_d = 1 - \frac{\left(\frac{D_d}{L_d}\right)}{\left(\frac{D_d}{L_d}\right)_{loss}}$$

Und die Funktion

$$\varepsilon_d = f(X_d)$$

Vom polynomialen Typ ist:

$$\varepsilon_d = 1 + \sum_{i=1\ldots} a_i X_d^i$$

**9.** Verfahren nach Anspruch 8, umfassend Bestimmen der Verteilung jedes Nicht-Ergoditätsparameters $\varepsilon_d$ unter Verwendung eines analytischen Modells.

**10.** Computerprogrammprodukt, umfassend Codebefehle zum Implementieren des Verfahrens nach einem der vorhergehenden Ansprüche, wenn es von einem Computer ausgeführt wird.

**11.** Nicht-transitorisches, computerlesbares Speichermedium, das ein computerausführbares Programm zum Ausführen des Verfahrens nach einem der Ansprüche 1 bis 9 kodiert.

**Revendications**

**1.** Procédé de mise à l'échelle d'une perméabilité relative d'une phase d'un fluide dans un modèle de réservoir, le procédé étant mis en oeuvre par un ordinateur, et comprenant les étapes de :

- définition (100) d'un modèle de réservoir comprenant un volume de dimensions $D_H$, $D_V$ selon respectivement deux directions distinctes H, V,
- réception (200) de données statistiques relatives au volume, comprenant :

∘ des proportions relatives d'au moins deux types de roches, dans lequel chaque type de roche correspond à une valeur de perméabilité et des courbes respectives de perméabilité relative avec une saturation d'eau de deux phases d'un fluide à l'intérieur du type de roche, l'une des phases étant de l'eau, et
∘ un variogramme de perméabilité absolue défini par des longueurs de corrélation $L_H$, $L_V$, le long des deux directions H, V, et

- calcul (330) de valeurs de perméabilité relative équivalente d'une phase du fluide à l'intérieur du volume, comprenant :

   ∘ au moins une valeur de perméabilité relative équivalente ($Kr_{eq,H}$) en fonction de la première direction H, et
   ∘ au moins une valeur de perméabilité relative équivalente ($Kr_{eq,V}$) en fonction de la deuxième direction V,

**caractérisé en ce que**

chaque valeur de perméabilité relative équivalente d'une phase du fluide en fonction d'une direction d choisie parmi H, V est calculée sur la base des valeurs de perméabilité relative de la phase du fluide à l'intérieur de chaque type de roche, et d'un coefficient dépendant de l'anisotropie du volume et de paramètres de non-ergodicité $\varepsilon_H$, $\varepsilon_V$ relatifs à chaque direction H, V, les paramètres de non-ergodicité dépendant des dimensions de volume le long desdites directions et du variogramme de perméabilité absolue.

2.  Procédé selon la revendication 1, dans lequel le calcul d'une valeur de perméabilité relative équivalente d'une phase en fonction de la direction d est basé sur une formule de puissance moyenne :

$$K_{r,eq,d} = \frac{\sqrt[\omega_d]{\sum_i \left(K_i . K_{r,i}\right)^{\omega_d}}}{\sqrt[\omega_d]{\sum_i (K_i)^{\omega_d}}}$$

où $K_i$ est la valeur de perméabilité d'un type de roche i, $K_{r,i}$ est une valeur de perméabilité relative d'une phase d'un fluide à l'intérieur du type de roche i, $K_{r,eq,d}$ est une valeur de perméabilité équivalente de la phase du fluide en fonction de la direction d, et $\omega_d$ est un coefficient de puissance, applicable pour la direction d, défini, pour la direction H étant une direction horizontale, par :

$$\omega_H = \frac{Arctan\alpha}{\pi - Arctan\alpha}$$

et pour la direction V étant une direction verticale, par :

$$\omega_V = -2\omega_H + 1$$

où $\alpha$ est le coefficient dépendant de l'anisotropie du volume et de paramètres de non-ergodicité, défini par :

$$\alpha = \frac{L_H}{L_V} \times \sqrt{\frac{K_V}{K_H}} \, \epsilon_H \epsilon_V$$

où $\frac{K_V}{K_H}$ et $\frac{L_H}{L_V}$ sont des anisotropies pétrophysiques et géostatistiques dépendant des données statistiques, et $\epsilon_H$, $\epsilon_V$ sont des paramètres de non-ergodicité relatifs respectivement à chaque direction H, V.

3.  Procédé selon la revendication 2, dans lequel le calcul (330) d'une valeur de perméabilité relative équivalente d'une phase en fonction d'une direction est réalisé pour une valeur déterminée de saturation d'eau de la phase du fluide, sur la base de valeurs de perméabilité relative équivalente de la phase à l'intérieur de chacun des types de roche pour la même valeur déterminée de saturation d'eau.

4.  Procédé selon la revendication 2, dans lequel le calcul (330) d'une valeur de perméabilité relative équivalente d'une phase en fonction d'une direction est réalisé pour une valeur déterminée de débit fractionnaire de la phase du fluide, sur la base de valeurs de perméabilité relative équivalente de la phase du fluide à l'intérieur de chacun des types de roche pour la même valeur déterminée de débit fractionnaire.

5.  Procédé selon les revendications 3 et 4, comprenant le calcul (330) de valeurs de perméabilité relative équivalente d'une phase du fluide en fonction d'une première direction pour des valeurs déterminées de saturation d'eau, et le calcul de valeurs de perméabilité relative équivalente de la phase du fluide en fonction d'une deuxième direction pour des valeurs déterminées de débit fractionnaire.

6.  Procédé selon l'une quelconque des revendications précédentes, dans lequel chaque paramètre de non-ergodicité $\varepsilon_d$ relatif à la direction d est également une fonction d'une moyenne m et d'une variance $\sigma$ des valeurs de perméabilité absolue de réservoir, la moyenne m et la variance $\sigma$ dépendant des données statistiques.

7.  Procédé selon l'une quelconque des revendications précédentes, dans lequel chaque paramètre de non-ergodicité $\varepsilon_d$ relatif à une direction d est exprimé en tant qu'une fonction :

$$\varepsilon_d = f(X_d)$$

dans lequel $X_d$ dépend du rapport ($D_d/L_d$) d'une dimension d du volume sur la longueur de corrélation de la dimension d, et de la valeur de limitation du rapport $(D_d/L_d)_{loss}$ du rapport, et dans lequel la fonction

$$\varepsilon_d = f(X_d)$$

satisfait la condition :

$$\lim_{\frac{D_d}{L_d} \to \left(\frac{D_d}{L_d}\right)_{loss}} \varepsilon_d = 1$$

8.  Procédé selon la revendication 7, dans lequel

$$X_d = 1 - \frac{\left(\frac{D_d}{L_d}\right)}{\left(\frac{D_d}{L_d}\right)_{loss}}$$

et la fonction

$$\varepsilon_d = f(X_d)$$

est du type polynomial :

$$\varepsilon_d = 1 + \sum_{i=1\ldots} a_i X_d^i$$

9.  Procédé selon la revendication 8, comprenant la détermination de la distribution de chaque paramètre de non-ergodicité $\varepsilon_d$ en utilisant un modèle analytique.

10. Produit programme informatique, comprenant des instructions de code pour mettre en oeuvre le procédé selon l'une quelconque des revendications précédentes, lorsqu'il est exécuté par un ordinateur.

11. Support de stockage non transitoire lisible par ordinateur codant un programme exécutable par ordinateur pour exécuter le procédé selon l'une quelconque des revendications 1 à 9.

FIG. 1

FIG. 2

FIG. 3

FIG. 4

**FIG. 5a**

**FIG. 5b**

**FIG. 6a**

**FIG. 6b**

**EP 3 956 699 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8359184 B

- US 2008234988 A1

**Non-patent literature cited in the description**

- **JONOUD et al.** Validity of Steady-State Upscaling Techniques. *SPE Reservoir Evaluation & Engineering n° 100293,* 20080400